# EUROPÄISCHE PATENTANMELDUNG

(11) **EP 4 091 519 A1**
(43) Veröffentlichungstag der Anmeldung: **23.11.2022**
(21) Anmeldenummer: 22168922.7
(22) Anmeldetag: 20.04.2022
(51) Int. Cl.: A47L 11/40, G05D 1/00

(54) **VERFAHREN ZUR STEUERUNG EINES ZUR REINIGUNG ODER PFLEGE EINER BODENFLÄCHE GEEIGNETEN SELBSTFAHRENDEN BODENBEARBEITUNGSGERÄTS IM RAUM SOWIE SELBSTFAHRENDES BODENBEARBEITUNGSGERÄT ZUR REINIGUNG ODER PFLEGE EINER BODENFLÄCHE EINES RAUMS**

(30) Priorität: 17.05.2021 DE 102021112676
(71) Anmelder: Miele & Cie. KG, 33332 Gütersloh (DE)
(72) Erfinder: Baus, Emil Friedrich, 33813 Oerlinghausen (DE); Buchholz, Thomas, 33378 Rheda-Wiedenbrück (DE); Ziegler, Leon, 33739 Bielefeld (DE)

(57) **Zusammenfassung**

Die Erfindung betrifft ein Verfahren zur Steuerung eines zur Reinigung einer Bodenfläche geeigneten selbstfahrenden Bodenbearbeitungsgeräts (1) im Raum. Hierbei umfasst das selbstfahrende Bodenbearbeitungsgerät (1) eine Mehrzahl von Sensoren, mittels derer Umgebungsparameter (3) des Raums (4), in dem sich das selbstfahrende Bodenbearbeitungsgerät (1) bewegt, wertmäßig erfasst werden. Die erfassten Werte der Umgebungsparameter (3) werden an eine Steuereinrichtung (5) geleitet und mittels der Steuereinrichtung (5) ausgewertet. Außerdem werden für die Auswertung der Werte der Umgebungsparameter (3) als zusätzliche Eingangsgrößen festgelegte Werte von Steuerparametern (6) herangezogen werden. Weiterhin werden die Umgebungsparameter (3) unter Berücksichtigung der Steuerparameter (6) mittels der Steuereinrichtung (5) ausgewertet und als Ergebnis der Auswertung Steuerbefehle zur Bewegung des selbstfahrenden Bodenbearbeitungsgeräts (1) im Raum (4) erzeugt. Anschließend werden die Steuerbefehle an mindestens eine Betriebseinrichtung (7) des selbstfahrenden Bodenbearbeitungsgeräts (1) geleitet und mittels der Betriebseinrichtung (7) verarbeitet, sodass das selbstfahrende Bodenbearbeitungsgerät (1) entsprechend der Steuerbefehle betrieben wird. Erfindungsgemäß wird zumindest der Wert mindestens eines Steuerparameters (6) verändert, um die Auswertung zur Erzeugung der Steuerbefehle und damit ein Verhalten des selbstfahrenden Bodenbearbeitungsgeräts (1) zu beeinflussen.

## Beschreibung

Die Erfindung betrifft ein Verfahren zur Steuerung eines zur Reinigung einer Bodenfläche geeigneten selbstfahrenden Bodenbearbeitungsgerät im Raum gemäß dem Oberbegriff des Anspruchs 1 sowie ein selbstfahrendes Bodenbearbeitungsgerät zur Reinging einer Bodenfläche eines Raums gemäß dem Anspruch 8.

Bei dem Verfahren zur Steuerung eines zur Reinigung einer Bodenfläche geeigneten selbstfahrenden Bodenbearbeitungsgeräts im Raum umfasst das selbstfahrende Bodenbearbeitungsgerät eine Mehrzahl von Sensoren, mittels derer Umgebungsparameter des Raums, in dem sich das selbstfahrende Bodenbearbeitungsgerät bewegt, wertmäßig erfasst werden. Außerdem werden die erfassten Werte der Umgebungsparameter an eine Steuereinrichtung geleitet und mittels der Steuereinrichtung ausgewertet. Weiterhin werden für die Auswertung der Werte der Umgebungsparameter als zusätzliche Eingangsgrößen festgelegte Werte von Steuerparametern herangezogen. Hierbei werden die Umgebungsparameter unter Berücksichtigung der Steuerparameter mittels der Steuereinrichtung ausgewertet und als Ergebnis der Auswertung Steuerbefehle zur Bewegung des selbstfahrenden Bodenbearbeitungsgeräts im Raum erzeugt. Außerdem werden die Steuerbefehle an mindestens eine Betriebseinrichtung des selbstfahrenden Bodenbearbeitungsgeräts geleitet und mittels der Betriebseinrichtung verarbeitet, sodass das selbstfahrende Bodenbearbeitungsgerät entsprechend der Steuerbefehle betrieben wird. Bei einem selbstfahrenden Bodenbearbeitungsgerätes kann es sich um einen Saugroboter, einen Wischroboter, einen Saugwischroboter oder um einen Roboter zur Pflege von Bodenflächen handeln.

Für ein Navigieren des selbstfahrenden Bodenbearbeitungsgeräts ist es maßgeblich, wie gut das selbstfahrende Bodenbearbeitungsgerät mittels der Sensoren die Umgebungsparameter des Raums erfasst. Dabei werden als Umgebungsparameter nicht nur Maße des Raums selbst, beispielsweise seine Breite oder Länge, sondern auch alle darin befindlichen Gegenstände erfasst.

Bei den Gegenständen kann es sich um die Einrichtung, beispielsweise Möbel, oder um herumliegende Gegenstände, beispielsweise Schmutz, Schuhe oder Spielzeug handeln. Hierbei charakterisieren die Gegenstände für das selbstfahrendes Bodenbearbeitungsgerät sehr unterschiedliche Eigenschaften. Während es einerseits Gegenstände gibt, die nicht von dem selbstfahrenden Bodenbearbeitungsgerät bewegt werden können, beispielweise ein Tischbein, gibt es andererseits Gegenstände, die von dem selbstfahrenden Bodenbearbeitungsgerät bewegt werden können, beispielsweise die Schuhe. Weiterhin gibt es unter den beweglichen Gegenständen solche, die aufgesaugt werden sollen und andere, die nicht aufgesaugt werden sollen. Während beispielsweise der Schmutz aufgesaugt werden soll, ist es wünschenswert, kleinteiliges Spielzeug oder gar Schmuck nicht aufzusaugen.

Außerdem umfassen die Gegenstände solche, die befahrbar beziehungsweise überfahrbar sind. Diese Gegenstände umfassen beispielsweise Türschwellen, die zwischen den jeweiligen Räumen angeordnet sind, oder die Möbel von geringer Höhe, beispielsweise Teppiche oder Lampenfüße. In Abhängigkeit von dem Gegenstand kann es wünschenswert sein, den Gegenstand zu umfahren oder nicht. Um zwischen den Räumen navigieren zu können, ist es erforderlich, dass das selbstfahrende Bodenbearbeitungsgerät die Türschwellen überwinden im Sinne von überfahren kann. Mit anderen Worten ist es wünschenswert, dass das selbstfahrende Bodenbearbeitungsgerät beispielsweise auf den Teppich fährt, sodass dieser gereinigt werden kann. Hingegen ist es nicht wünschenswert, dass das selbstfahrende Bodenbearbeitungsgerät den Lampenfuß "erklimmt", da dies zu Verkratzen von dessen Oberfläche führen könnte.

Mindestens einer der Sensoren kann beispielsweise ein optischer Sensor sein, mittels dessen ein Abstand zu den Gegenständen und/oder deren Maße ermittelt werden können. Mit anderen Worten ermittelt das selbstfahrende Bodenbearbeitungsgerät die Umgebungsparameter des Raums, sodass er sowohl seine eigene Position als auch die Position und die Maße der Gegenstände des Raums erfassen kann.

Die erfassten Umgebungsparameter werden an die Steuereinrichtung geleitet, mittels derer die Umgebungsparameter ausgewertet werden. Zusätzlich zu den Umgebungsparametern werden die Steuerparameter herangezogen, die als zusätzliche Eingangsgrößen für die Steuereinrichtung charakterisiert werden können. Die Umgebungsparameter werden unter Berücksichtigung der Steuerparameter ausgewertet. Mit anderen Worten wird als Umgebungsparameter beispielsweise der Abstand zu einem Gegenstand ermittelt, welcher sodann unter Berücksichtigung der Steuerparameter ausgewertet wird. Als Steuerparameter kann in diesem Fall beispielsweise ein Mindestabstand zu Gegenständen hinterlegt sein. Auf Basis von dem Ergebnis dieser Auswertung von Umgebungsparametern unter Berücksichtigung von dem Steuerparameter wird der Steuerbefehl erzeugt. Der Steuerbefehl wird an die Betriebseinrichtung des selbstfahrenden Bodenbearbeitungsgeräts geleitet und von dieser derart verarbeitet, dass das selbstfahrende Bodenbearbeitungsgerät entsprechend der Steuerbefehle betrieben wird.

Dem Stand der Technik ist es als bekannt zu entnehmen, dass Parameter des selbstfahrenden Bodenbearbeitungsgeräts, beispielsweise eine Saugleistung und/oder eine Borstendrehzahl, spezifisch für die einzelnen Räume eingestellt werden können. Mit anderen Worten kann für das Badezimmer eine andere Saugleistung als für eine Küche eingestellt werden. Außerdem ist es bekannt, dass ein Klettermodus eingestellt werden kann. So kann ein Benutzer beispielsweise einstellen, in welchem Maße das selbstfahrende Bodenbearbeitungsgerät Hindernisse erklimmen soll. In diesem Zusammenhang sind beispielsweise Einstellungen wie "low" (englisch für: niedrig) oder "high" (englisch für: hoch) wählbar. Mit der Einstellung "low" vermeidet das selbstfahrende Bodenbearbeitungsgerät es sogar, hochflorige Teppiche zu erklimmen, während er bei "high" sogar hohe Türschwellen erklimmt.

Nachteilig bei dem vorgenannten Stand der Technik ist, dass die Parameter auf Basis von Versuchshaushalten und Laborversuchen ermittelt und festgelegt werden. Eine Parametrisierung wird üblicherweise so gewählt, dass diese den Anforderungen bzw. Wünschen möglichst vieler Benutzer gerecht wird. Sonder- oder Grenzfälle können daher nicht berücksichtigt werden oder werden einfach vergessen. Zudem werden die Parameter von Herstellerseite üblicherweise so gewählt, dass Sachbeschädigungen durch zu aggressives Navigieren des selbstfahrenden Bodenbearbeitungsgerätes möglichst vermieden werden. Mit anderen Worten kann es im Interesse der Hersteller sein, weniger gründlich zu reinigen, um Sachbeschädigungen zu reduzieren. In diesem Zusammenhang wird beispielsweise häufig auf die Reinigung unter Vorhängen verzichtet, da diese dafür unterfahren werden müssten und hierdurch beschädigt werden könnten. Außerdem erfolgt die Reinigung von beispielsweise Fußleisten oder sonstigen zu reinigenden Gegenständen, wie den Möbeln, häufig mittels kontaktlosem Abfahren durch das selbstfahrende Bodenbearbeitungsgerät, um Kontakt mit den Gegenständen und somit Sachbeschädigungen zu vermeiden. Häufig würden die Benutzer es allerdings bevorzugen, mögliche Sachbeschädigungen im Gegenzug für eine gründlichere Reinigung zu riskieren beziehungsweise in Kauf zu nehmen. Auch bleiben Änderungen, die in Abhängigkeit von Tages- und/oder Wochenzeiten entstehen, unberücksichtigt. Der Benutzer kann nur zwischen verschiedenen Einstellungen wählen, die jeweils durch einen festgelegten und unveränderbaren Parameter charakterisiert sind. Dementsprechend sind die einzelnen Parameter nicht wertmäßig durch den Kunden veränderbar. Hierdurch ist es unmöglich, allen Benutzern gerecht zu werden, da die Anforderungen an die Reinigung sehr individuell sind.

### Aufgabe

Es ist daher Aufgabe der vorliegenden Erfindung, ein Verfahren sowie ein selbstfahrendes Bodenbearbeitungsgerät bereitzustellen, durch den die Nachteile des Stands der Technik überwunden werden, insbesondere eine individuellere Benutzerzufriedenheit erreicht wird.

### Lösung

Die vorstehende Aufgabe wird durch ein Verfahren zur Steuerung eines zur Reinigung einer Bodenfläche geeigneten selbstfahrenden Bodenbearbeitungsgeräts im Raum gemäß dem Anspruch 1 sowie durch ein selbstfahrendes Bodenbearbeitungsgerät zur Reinging einer Bodenfläche eines Raums gemäß dem Anspruch 8 gelöst. Vorteilhafte Ausgestaltungen ergeben sich aus den Unteransprüchen.

Das erfindungsgemäße Verfahren ist dadurch gekennzeichnet, dass zumindest der Wert mindestens eines Steuerparameters verändert wird, um die Auswertung zur Erzeugung der Steuerbefehle und damit ein Verhalten des selbstfahrenden Bodenbearbeitungsgeräts zu beeinflussen.

Die Erfindung hat gegenüber dem Stand der Technik viele Vorteile.

Da das selbstfahrende Bodenbearbeitungsgerät beziehungsweise dessen Steuereinrichtung die Umgebungsparameter unter Berücksichtigung der Steuerparameter bewertet, hängt das Ergebnis der Auswertung von den Steuerparametern ab. Mit anderen Worten wird das Ergebnis der Auswertung maßgeblich durch die Steuerparameter beeinflusst. Auf Grundlage dieser Bewertung steuert die Betriebseinrichtung das selbstfahrende Bodenbearbeitungsgerät. Der Benutzer kann erfindungsgemäß also mindestens einen der Steuerparameter ändern, sodass er zumindest mittelbar Einfluss auf das Navigieren des selbstfahrenden Bodenbearbeitungsgerätes nehmen kann. Mit anderen Worten kann der Benutzer beeinflussen beziehungsweise einstellen, wie das selbstfahrende Bodenbearbeitungsgerät bestimmte Umgebungsparameter bewerten soll. Beispielsweise kann der Benutzer einstellen, welcher Abstand zu Fußleisten tolerabel ist. Handelt es sich bei den Fußleisten des Benutzers um solche robuster Bauweise, kann es für ihn wünschenswert sein, den Steuerparameter "Fußleisten" beispielsweise auf "Kontakt" einzustellen. In der Folge würde das selbstfahrende Bodenbearbeitungsgerät die Fußleisten beim Abfahren kontaktieren, also einen Abstand von null zu diesen einstellen. Für Benutzer mit sehr empfindlichen Fußleisten oder ohne Fußleisten kann es wünschenswert sein, diese nicht zu kontaktieren, um Beschädigungen der Fußleisten oder Verschmutzungen einer Wand zu vermeiden. Folglich würde der Benutzer den Steuerparameter "Fußleisten" beispielsweise auf "kontaktlos" einstellen, sodass das selbstfahrende Bodenbearbeitungsgerät die Fußleisten mit Sicherheitsabstand abfährt. Vorteilhafterweise ergibt sich hierdurch ein besonders vielseitiger sowie individueller Betrieb des selbstfahrenden Bodenbearbeitungsgeräts.

Es ist gemäß einer vorzugsweisen Ausgestaltung der Erfindung vorgesehen, dass der Wert mindestens eines Steuerparameters in Abhängigkeit von zeitlichen und/oder räumlichen Randbedingungen automatisch geändert wird, vorzugsweise in Abhängigkeit von einer Position des selbstfahrenden Bodenbearbeitungsgeräts im Raum und/oder von dem Erkennen eines Gegenstands und/oder von einer Tages- oder Wochenzeit. Mit anderen Worten kann das selbstfahrende Bodenbearbeitungsgerät beispielsweise die Art des Raumes erkennen und sodann entsprechende Steuerparameter einstellen. In diesem Zusammenhang ist es denkbar, dass das selbstfahrende Bodenbearbeitungsgerät ein Sofa anhand seiner Dimensionen erkennt und somit erkennt, dass er sich im Wohnzimmer befindet, da das Sofa für dieses ein charakteristischer Einrichtungsgegenstand ist. Auch ist denkbar, dass das selbstfahrende Bodenbearbeitungsgerät seine Reinigung der Tages- oder Wochenzeit anpasst. Es kann beispielsweise wünschenswert sein, das selbstfahrende Bodenbearbeitungsgerät nicht nachts zu betreiben oder nur dann zu betreiben, wenn der Benutzer üblicherweise außer Haus ist. Hierdurch ergibt sich der Vorteil, dass das selbstfahrende Bodenbearbeitungsgerät besonders bedarfsgerecht und komfortabel betrieben werden kann.

Bevorzugt ist vorgesehen, dass der Wert mindestens eines Steuerparameters ortsreferenziert und/oder gegenstandsreferenziert und/oder zeitreferenziert manuell vorgegeben wird, vorzugsweise für logische Unterräume des Raumes und/oder Gegenstände und/oder für bestimmte Tages- oder Wochenzeiten. Innerhalb einzelner Räume kann es Bereiche geben, die der Benutzer gründlicher beziehungsweise weniger gründlich reinigen will. So kann der Benutzer beispielsweise wünschen, dass das selbstfahrende Bodenbearbeitungsgerät in der Nähe seines Kamins besonders gründlich reinigt, da dort üblicherweise viel Verschmutzung auftritt. Hingegen kann es wünschenswert sein, in der Nähe eines Klaviers weniger und nur mit Abstand zu reinigen, um Beschädigungen zu vermeiden. Der Benutzer kann somit das selbstfahrende Bodenbearbeitungsgerät sehr genau auf seine Bedürfnisse einstellen. Hierdurch ergibt sich vorteilhafterweise ein besonders effizienter Betrieb.

Gemäß einer vorteilhaften Ausgestaltung der Erfindung ist vorgesehen, dass eine Mehrzahl von Steuerparametern zu einem Parameterblock zusammengefasst ist, wobei Werte der zu dem Parameterblock zusammengefassten Steuerparameter gemeinsam verändert werden, insbesondere automatisch oder manuell. In diesem Zusammenhang ist es beispielsweise denkbar, dass das selbstfahrende Bodenbearbeitungsgerät die Fußleisten zwar "kontaktlos" abfahren soll, ansonsten aber alle Gegenstände auf der Einstellung "Kontakt" abzufahren. So lassen sich die Anforderungen clustern, das heißt, dass mehrere Anforderungen zusammengefasst und als ein Profil betrachtet werden können. Vorteilhafterweise ergibt sich für den Benutzer ein besonders einfacher und umfangreicher Betrieb.

Hierbei sieht eine weitere Ausgestaltung der Erfindung vor, dass zumindest für einen Steuerparameter diskrete Alternativwerte vorgegeben sind, wobei eine Veränderung des Werts eines jeweiligen Steuerparameters zwischen diesen Alternativwerten möglich ist, vorzugsweise mittels manueller Veränderung. Dem Benutzer ist also eine festgelegte Anzahl von Steuerparametern zugänglich, zwischen denen er auswählen kann. Vorteilhafterweise ergibt sich dadurch für den Benutzer eine besonders intuitive Bedienbarkeit.

In einer weiteren Ausgestaltung der Erfindung wird vorzugsweise die Veränderung des Werts mindestens eines Steuerparameters manuell vorgenommen. Hierzu kann der Benutzer beispielsweise den Abstand, der zu den Gegenständen eingehalten werden soll, manuell auf einen bestimmten Wert einstellen. Dadurch ergibt sich der Vorteil, dass der Benutzer das selbstfahrende Bodenbearbeitungsgerät besonders bedarfsgerecht einsetzen kann.

In einer besonders vorteilhaften Ausgestaltung der Erfindung ist vorgesehen, dass die Steuereinrichtung ein Modul für maschinelles Lernen umfasst, das dazu geeignet ist, ein Verhalten des selbstfahrenden Bodenbearbeitungsgeräts unter Referenzierung des Werts mindestens eines Umgebungsparameters, insbesondere einer Position des selbstfahrenden Bodenbearbeitungsgeräts im Raum oder einer Gegenwart eines Gegenstandes, zu erfassen und daraufhin für einen zukünftigen Betrieb des selbstfahrenden Bodenbearbeitungsgeräts bei Wiedererkennen des Werts des mindestens einen Umgebungsparameters den Wert mindestens eines Steuerparameters automatisch dahingehend zu verändern, dass das Verhalten des selbstfahrenden Bodenbearbeitungsgeräts in derselben Situation gegenüber einem vergangenen Verhalten verändert ist. In diesem Zusammenhang ist es denkbar, dass das selbstfahrende Bodenbearbeitungsgerät beispielsweise ein Bett erkennt und dementsprechend die entsprechenden Steuerparameter für ein Schlafzimmer wählt. Außerdem ist es denkbar, dass das selbstfahrende Bodenbearbeitungsgerät beispielsweise einen Untergrund, wie beispielsweise Fliesen erkennt, und somit die entsprechenden Steuerparameter für die Küche oder das Badezimmer einstellen kann. Mit anderen Worten muss der Benutzer das selbstfahrende Bodenbearbeitungsgerät nicht erst "anlernen", sondern dieser lernt selbstständig und verbessert die Ergebnisse seiner Steuereinrichtung ständig. Hierdurch ergibt sich für den Benutzer der Vorteil, dass der Betrieb besonders zeitsparend erfolgen kann.

Die zugrundeliegende Aufgabe wird ferner durch ein selbstfahrendes Bodenbearbeitungsgerät zur Reinging einer Bodenfläche eines Raums gemäß dem Anspruch 8 erfüllt. Die Vorteile sind bereits durch die obenstehenden Ausführungen erläutert. Die Vorteile des oben näher beschriebenen Verfahrens mittels des selbstfahrenden Bodenbearbeitungsgeräts stellen ebenfalls Vorteile des selbstfahrendes Bodenbearbeitungsgeräts dar und umgekehrt.

Gemäß einem weiteren Merkmal der Erfindung ist diese gekennzeichnet durch mindestens ein Eingabemodul zur manuellen Eingabe eines Werts mindestens eines Steuerparameters.

Ein Ausführungsbeispiel der Erfindung ist in den Zeichnungen rein schematisch dargestellt und wird nachfolgend näher beschrieben. Es zeigt:
- Figur 1: eine schematische Draufsicht einer Anordnung eines erfindungsgemäßen selbstfahrendes Bodenbearbeitungsgeräts in einem Raum;
- Figur 2: eine weitere schematische Draufsicht gemäß Figur 1;
- Figur 3: eine weitere schematische Draufsicht gemäß Figur 1;
- Figur 4: eine schematische Draufsicht einer anderen Anordnung des selbstfahrenden Bodenbearbeitungsgeräts im Raum;
- Figur 5: eine weitere schematische Draufsicht gemäß Figur 4;
- Figur 6: eine weitere schematische Draufsicht gemäß Figur 4; und
- Figur 7: ein Eingabemodul des selbstfahrenden Bodenbearbeitungsgeräts.

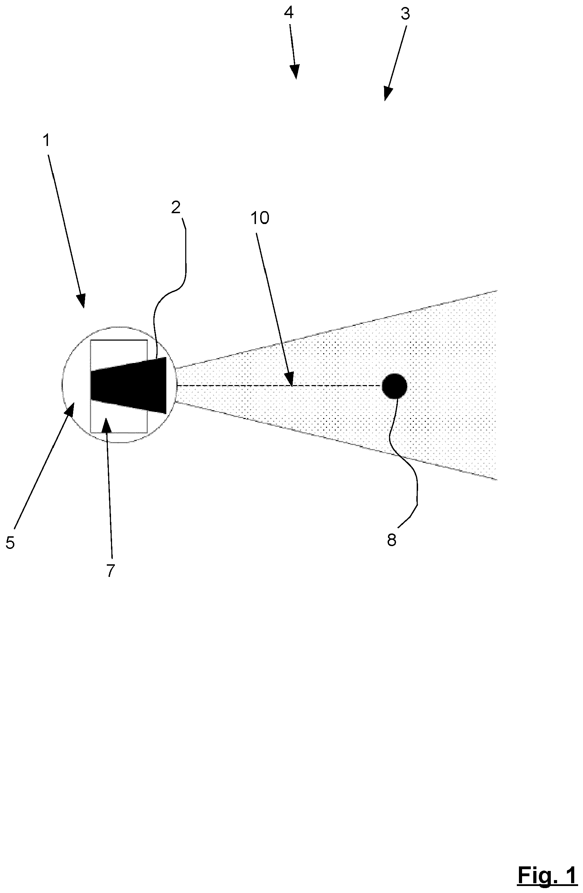

**Figur 1** zeigt in einer schematischen Draufsicht eine Anordnung eines erfindungsgemäßen selbstfahrenden Bodenbearbeitungsgeräts **1** in einem Raum **4.** In dem Raum **4** ist außerdem ein Gegenstand **8** angeordnet. Der Gegenstand **8** kann dabei beispielsweise ein Einrichtungsgegenstand, beispielsweise ein Sofa, oder ein herumliegender Gegenstand **8,** beispielsweise ein Schuh sein. Bei dem Gegenstand **8** kann es sich außerdem um Schmutz handeln, der mittels des selbstfahrenden Bodenbearbeitungsgeräts **1** aufgesaugt werden soll.

Das selbstfahrende Bodenbearbeitungsgerät **1** umfasst eine Mehrzahl von Sensoren **2,** mittels derer er wertmäßig Umgebungsparameter **3** des Raums **4** erfassen kann. Zumindest einer der Sensoren **2** kann ein optischer Sensor, beispielsweise ein LIDAR sein. Die Umgebungsparameter **3** können beispielsweise einen Abstand zu dem Gegenstand **8** oder einen Abstand zu einer Wand charakterisieren. Der Abstand wird insbesondere in einer Fahrtrichtung **10** des selbstfahrenden Bodenbearbeitungsgeräts **1** ermittelt.

Außerdem umfasst das selbstfahrende Bodenbearbeitungsgerät **1** eine Steuereinrichtung **5.** Die von den Sensoren **2** erfassten Werte der Umgebungsparameter **3** werden an die Steuereinrichtung **5** geleitet. Neben den Umgebungsparametern **3** stehen der Steuereinrichtung **5** außerdem Steuerparameter **6** zur Verfügung. Die Steuereinrichtung **5** wertet die Umgebungsparameter **3** unter Berücksichtigung der Steuerparameter **6** aus. In der Praxis kann dies bedeuten, dass die Sensoren **2** beispielsweise den Abstand zu dem Gegenstand **8** erfassen und als Steuerparameter **6** ein Mindestabstand hinterlegt ist. Dementsprechend generiert die Steuereinrichtung **5** einen Steuerbefehl, der sodann an die Betriebseinrichtung **7, z. B. eine Fahr-Antriebseinrichtung oder eine Lenkeinrichtung oder eine Saugeinrichtung** weitergeleitet wird. In der Folge kann das selbstfahrende Bodenbearbeitungsgerät **1** entsprechend der Steuerbefehle betrieben werden.

In Abhängigkeit von den Gegenständen und von Vorlieben eines Benutzers kann ein unterschiedliches Navigieren des selbstfahrenden Bodenbearbeitungsgeräts **1** wünschenswert sein. Während es beispielsweise wünschenswert sein kann, eine Türschwelle zu überfahren, kann es nicht wünschenswert sein, Schmuck, der versehentlich herumliegt, zu überfahren und somit einzusaugen. Während es unproblematisch ist, herumliegende Schuhe vor dem selbstfahrenden Bodenbearbeitungsgerät **1** herzuschieben, kann dies herumstehende Vasen beschädigen oder zerstören. Das selbstfahrende Bodenbearbeitungsgerät **1** muss dementsprechend eine Vielzahl von Fällen anhand von entsprechenden Steuerparametern **6** unterscheiden beziehungsweise berücksichtigen können und in Abhängigkeit von diesen navigieren.

Es ist daher vorgesehen, dass die Steuerparameter **6** veränderbar beziehungsweise einstellbar sind.

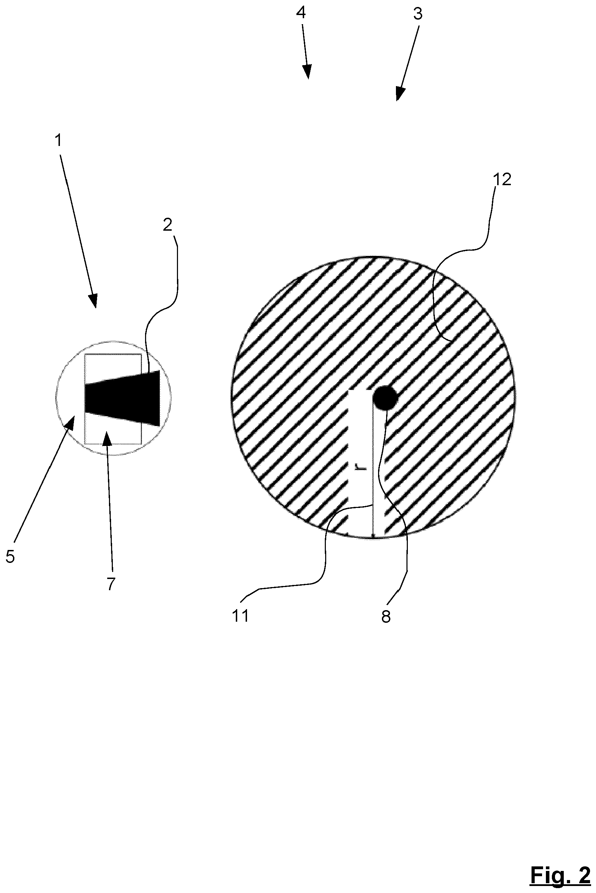

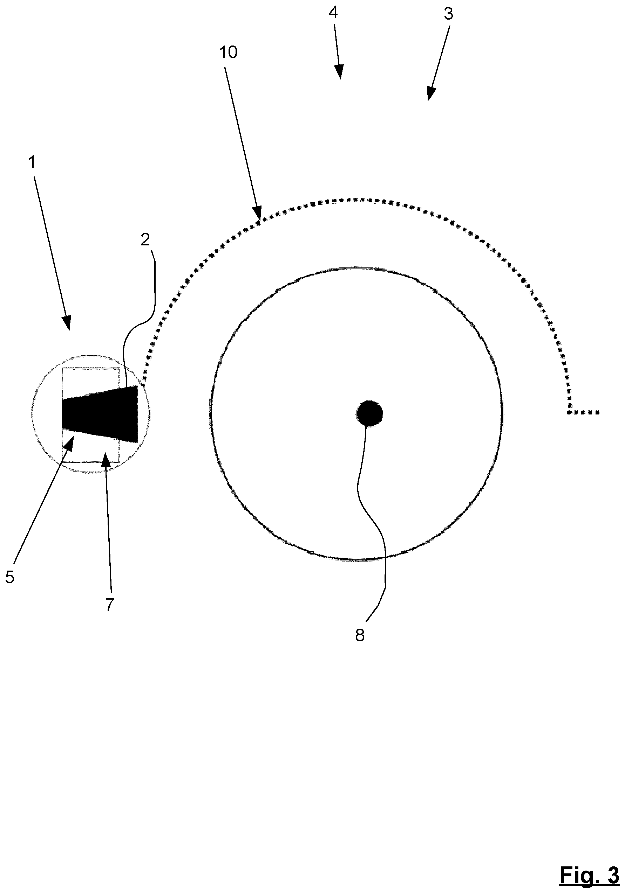

Den **Figuren 2** **und** **3** ist ein Fall zu entnehmen, in dem das selbstfahrende Bodenbearbeitungsgerät **1** den Gegenstand **8** umfahren soll. Es kann sich bei dem Gegenstand **8** um eine Vase handeln. In diesem Fall erfasst das selbstfahrende Bodenbearbeitungsgerät **1** mittels der Sensoren **2** den Gegenstand bezüglich seiner Dimension beziehungsweise Maße. Sodann erstellt das selbstfahrende Bodenbearbeitungsgerät **1** mit einem Radius **11** eine virtuelle Sperrzone **12** um den Gegenstand **8** herum. Dies ist in **Figur 2** dargestellt. Mit anderen Worten ist der Gegenstand **8** von der Sperrzone **12** geschützt, da das selbstfahrende Bodenbearbeitungsgerät **1** die Sperrzone **12** nicht befahren darf beziehungsweise wird. Das selbstfahrende Bodenbearbeitungsgerät **1** navigiert also derart um der Gegenstand **8** herum, dass er die um den Gegenstand **8** herumgelegte Sperrzone **12** nicht befährt, wie dies **Figur 3** zu entnehmen ist. Mit anderen Worten passt das selbstfahrende Bodenbearbeitungsgerät **1** seine Fahrtrichtung **10** so an, wie es die von ihm selbst erstellte Sperrzone **12** gebietet.

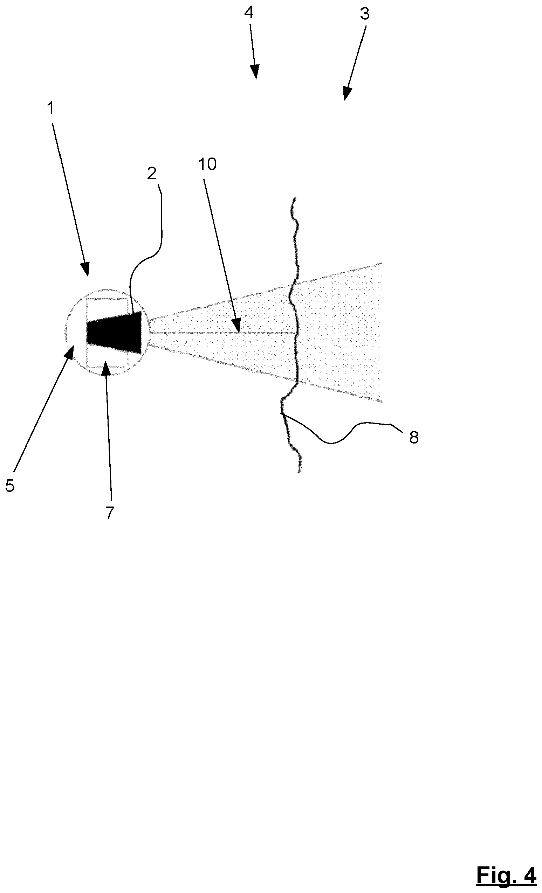

Bei manchen Gegenständen **8** ist das Verhalten des selbstfahrenden Bodenbearbeitungsgeräts **1** nicht eindeutig zu kategorisieren beziehungsweise hängt es maßgeblich von den Vorlieben des Benutzers ab. Es ist beispielsweise denkbar, dass der Gegenstand **8** ein Vorhang ist und unterfahren werden soll, oder eben nicht. Die **Figuren 4 bis 6** zeigen einen als Vorhang ausgebildeten Gegenstand **8.** Handelt es sich bei dem Vorhang **8** beispielsweise um ein empfindliches Modell, kann der Benutzer wünschen, dass unter dem Vorhang **8** nicht gereinigt wird. Der Benutzer nimmt also in Kauf, dass nicht so gründlich gereinigt wird wie möglich, um den Vorhang vor möglichen Beschädigungen zu schützen. Gleichermaßen kann der Benutzer wünschen, dass unter einem robusten Vorhang **8** durchaus gereinigt wird. Der Benutzer nimmt in diesem Falle also in Kauf, dass der Vorhang möglicherweise beschädigt wird. Im Verhältnis zu einer gründlichen Reinigung stört den Benutzer das im vorliegenden Fall allerdings nicht.

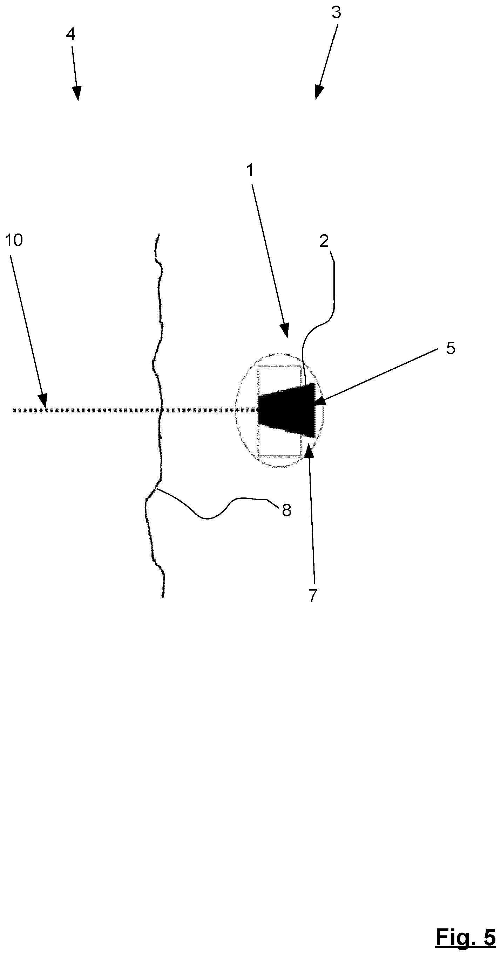

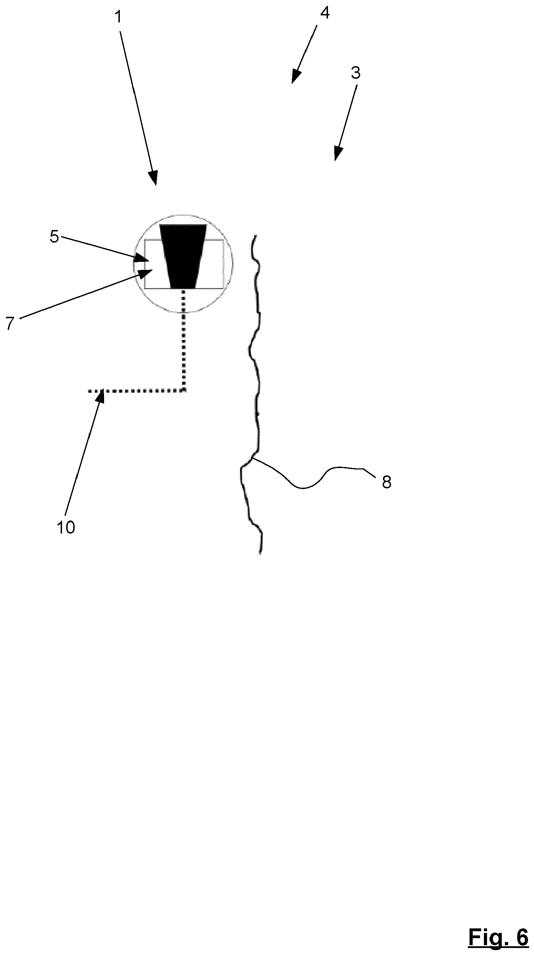

Anhand der Steuerparameter **6** kann durch den Benutzer beispielsweise eingestellt werden, ob der Gegenstand **8** umfahren werden soll oder nicht. In der Praxis kann beispielsweise in Bezug auf die Vorhänge **8** der Steuerparameter **6** "unterfahren" beziehungsweise "nicht unterfahren" sein. Das selbstfahrende Bodenbearbeitungsgerät **1** würde dementsprechend den Vorhang **8** gemäß dem Steuerparameter **6** "unterfahren" unterfahren, wie **Figur 5** zeigt, beziehungsweise gemäß dem Steuerparameter **6** "nicht unterfahren" nicht unterfahren, wie **Figur 6** zeigt. Mit anderen Worten ist das Navigieren des selbstfahrenden Bodenbearbeitungsgeräts **1** von den Steuerparametern **6** abhängig und vom Benutzer einstellbar, da er die Steuerparameter **6** verändern beziehungsweise einstellen kann.

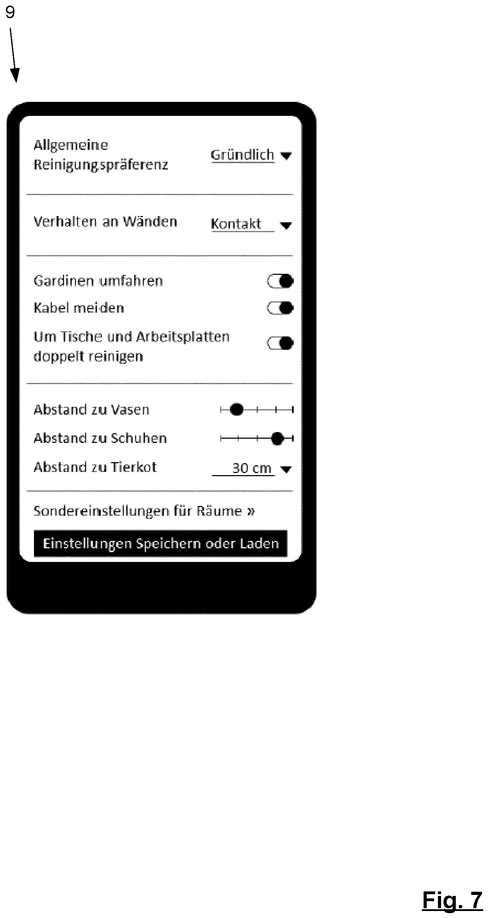

Die Steuerparameter **6** können mit dem in **Figur 7** dargestellten Eingabemodul **9** beispielsweise manuell eingestellt werden. Vorliegend handelt es sich bei dem Eingabemodul **9** um ein Tablet, das leitungslos mit dem selbstfahrenden Bodenbearbeitungsgerät **1** kommunizieren kann.

### Bezugszeichenliste

- 1: Selbstfahrendes Bodenbearbeitungsgerät
- 2: Sensor
- 3: Umgebungsparameter
- 4: Raum
- 5: Steuereinrichtung
- 6: Steuerparameter
- 7: Betriebseinrichtung
- 8: Gegenstand
- 9: Eingabemodul
- 10: Fahrtrichtung
- 11: Radius
- 12: Sperrzone

## Patentansprüche

1. Verfahren zur Steuerung eines zur Reinigung einer Bodenfläche geeigneten selbstfahrenden Bodenbearbeitungsgeräts (1) im Raum,
wobei das selbstfahrende Bodenbearbeitungsgerät (1) eine Mehrzahl von Sensoren (2) umfasst, mittels derer Umgebungsparameter (3) des Raums (4), in dem sich das selbstfahrende Bodenbearbeitungsgerät (1) bewegt, wertmäßig erfasst werden,
wobei die erfassten Werte der Umgebungsparameter (3) an eine Steuereinrichtung (5) geleitet und mittels der Steuereinrichtung (5) ausgewertet werden,
wobei bei der Auswertung der Werte der Umgebungsparameter (3) als zusätzliche Eingangsgrößen festgelegte Werte von Steuerparametern (6) berücksichtigt werden,
wobei als Ergebnis der Auswertung der Umgebungsparameter (3) unter Berücksichtigung der Steuerparameter (6) Steuerbefehle zur Bewegung des selbstfahrenden Bodenbearbeitungsgeräts (1) im Raum (4) erzeugt werden,
wobei die Steuerbefehle an mindestens eine Betriebseinrichtung (7) des selbstfahrenden Bodenbearbeitungsgeräts (1) geleitet und mittels der Betriebseinrichtung (7) verarbeitet werden, sodass das selbstfahrende Bodenbearbeitungsgerät (1) entsprechend der Steuerbefehle betrieben wird,
**dadurch gekennzeichnet, dass**
zumindest der Wert mindestens eines Steuerparameters (6) verändert wird, um die Auswertung zur Erzeugung der Steuerbefehle und damit ein Verhalten des selbstfahrenden Bodenbearbeitungsgeräts (1) zu beeinflussen.

2. Verfahren nach Anspruch 1, **dadurch gekennzeichnet, dass** der Wert mindestens eines Steuerparameters (6) in Abhängigkeit von zeitlichen und/oder räumlichen Randbedingungen automatisch geändert wird, vorzugsweise in Abhängigkeit von einer Position des selbstfahrenden Bodenbearbeitungsgeräts (1) im Raum und/oder von dem Erkennen eines Gegenstands (8) und/oder von einer Tages- oder Wochenzeit.

3. Verfahren nach Anspruch 2, **dadurch gekennzeichnet, dass** der Wert mindestens eines Steuerparameters (6) ortsreferenziert und/oder gegenstandsreferenziert und/oder zeitreferenziert manuell vorgegeben wird, vorzugsweise für logische Unterräume des Raumes und/oder Gegenstände und/oder für bestimmte Tages- oder Wochenzeiten.

4. Verfahren nach einem der vorhergehenden Ansprüche, **dadurch gekennzeichnet, dass** eine Mehrzahl von Steuerparametern (6) zu einem Parameterblock zusammengefasst ist, wobei Werte der zu dem Parameterblock zusammengefassten Steuerparameter (6) gemeinsam verändert werden, insbesondere automatisch oder manuell.

5. Verfahren nach einem der vorhergehenden Ansprüche, **dadurch gekennzeichnet, dass** zumindest für einen Steuerparameter (6) diskrete Alternativwerte vorgegeben sind, wobei eine Veränderung des Werts eines jeweiligen Steuerparameters (6) zwischen diesen Alternativwerten möglich ist, vorzugsweise mittels manueller Veränderung.

6. Verfahren nach einem der vorhergehenden Ansprüche, **dadurch gekennzeichnet, dass** die Veränderung des Werts mindestens eines Steuerparameters (6) manuell vorgenommen wird.

7. Verfahren nach einem der vorhergehenden Ansprüche, **dadurch gekennzeichnet, dass** die Steuereinrichtung (5) ein Modul für maschinelles Lernen umfasst, das dazu geeignet ist, ein Verhalten des selbstfahrenden Bodenbearbeitungsgeräts (1) unter Referenzierung des Werts mindestens eines Umgebungsparameters (3), insbesondere einer Position des selbstfahrenden Bodenbearbeitungsgeräts (1) im Raum oder einer Gegenwart eines Gegenstandes (8), zu erfassen und daraufhin für einen zukünftigen Betrieb des selbstfahrenden Bodenbearbeitungsgeräts (1) bei Wiedererkennen des Werts des mindestens einen Umgebungsparameters (3) den Wert mindestens eines Steuerparameters (6) automatisch dahingehend zu verändern, dass das Verhalten des selbstfahrenden Bodenbearbeitungsgeräts (1) in derselben Situation gegenüber einem vergangenen Verhalten verändert ist.

8. Selbstfahrendes Bodenbearbeitungsgerät (1) zur Reinigung einer Bodenfläche eines Raums, umfassend
- eine Mehrzahl von Sensoren, mittels derer zumindest Umgebungsparameter (3) des Raums (4), in dem sich das selbstfahrende Bodenbearbeitungsgerät (1) bewegt, wertmäßig erfassbar sind,
- eine mit den Sensoren (2) in Daten übertragender Weise verbundene Steuereinrichtung, mittels der die erfassten Werte der Umgebungsparameter (3) sowie ein Wert mindestens eines festgelegten Steuerparameters (6) auswertbar und als Ergebnis der Auswertung Steuerbefehle zur Bewegung des selbstfahrenden Bodenbearbeitungsgeräts (1) im Raum (4) erzeugbar sind,
- mindestens eine Betriebseinrichtung (7) zum Betrieb des selbstfahrenden Bodenbearbeitungsgeräts, die mit der Steuereinrichtung (5) in Daten übertragender Verbindung steht, sodass erzeugte Steuerbefehle von der Steuereinrichtung (5) an die Betriebseinrichtung (7) leitbar und mittels der Betriebseinrichtung (7) verarbeitbar sind, sodass sich das selbstfahrende Bodenbearbeitungsgerät (1) entsprechend der Steuerbefehle verhält,
**dadurch gekennzeichnet, dass**
die Steuereinrichtung (5) zur Durchführung des Verfahrens nach einem der vorhergehenden Ansprüche eingerichtet ist.

9. Selbstfahrendes Bodenbearbeitungsgerät (1) nach dem vorhergehenden Anspruch, **gekennzeichnet durch** mindestens ein Eingabemodul (9) zur manuellen Eingabe eines Werts mindestens eines Steuerparameters (6).
